# EUROPEAN PATENT SPECIFICATION

(11) **EP 1 088 604 B1**
(45) Date of publication and mention of the grant of the patent: **24.03.2004**
(21) Application number: 00830609.4
(22) Date of filing: 07.09.2000
(51) Int. Cl.: B08B 9/42, B65G 47/84

(54) **Deforming pincers in particular for a rinsing machine**
Verformbare Greifer, insbesondere für eine Spülmaschine
Pinces déformables, en particulier pour une machine de rincage

(30) Priority: 30.09.1999 IT PR990017 U
(43) Date of publication of application: 04.04.2001
(73) Proprietor: SIG Simonazzi S.p.A., 43100 Parma (IT)
(72) Inventor: Preti, Fabrizio, 43015 Noceto, Parma (IT)
(74) Representative: Gotra, Stefano

(56) References cited:
- EP-A- 0 577 569
- EP-A- 0 721 808
- EP-A- 0 854 102
- FR-A- 2 765 816

## Description

The present invention relates to a set of deforming pincers, in particular for rinsing machines in bottling plants.

EP 0721808 teaches a set of dual pincers for rinsing machine able to grip the containers immediately underneath the projecting collar and at the centre of the body, wherein each pincer is elastically deformable to couple with the containers during their introduction into the rinsing machine or the removal from the rinsing machine. However, both sets of pincers are necessary to allow the axial rigidity of the container avoiding lateral oscillations.

IT 1280740 discloses a single set of gripping pincers for containers made of plastic material, which is substantially formed by a single-block element comprising a non-deformable portion anchored to the rinsing machine and an elastically deformable semi-cylindrical portion that extends by an angle ranging between 230° and 260° and is so shaped as to grip or respectively release, deforming elastically by simple pressure, the area of the container above the collar projecting in correspondence with the thread of the container mouth.

FR-A- 2 765 816 discloses pincers according to the preamble of claim 1.

The semi-cylindrical portion is internally provided with a recess that is coupled with a ring which closes inferiorly the tread of the container and has chamfered edges to favour the entry of the container into the pincers.

In both the types of deforming pincers described above, a compromise must be reached between the need for a strong grip on the container (which is obtained with a slight opening of the pincers) and the need for a secure grip (which instead is obtained with pincers having a much narrower inlet than the container to be gripped, but at the same time thus requires a greater opening and hence is destined to guarantee a lesser gripping force on the container).

The Italian patent application for industrial invention no. PR97A000066 in the name of the same Applicant discloses a grip element anchored to the rotatory rinsing machine by means of at least a flexible connector (and preferably two superposed connectors) so shaped as to provide the grip element with freedom of angular motion relative to the rinsing machine whereto it is anchored.

The grip element is made of steel, it has semi-cylindrical shape, extends for an angle ranging between 230° and 280° and moves angularly by about 5°-30°.

The method provides for the entry of the containers into the rinsing machine by means of pressure exerted by the containers on the grip elements associated to the rinsing machine and actuated by the pressure exerted by the containers; the treatment of the containers in the rinsing machine and the exit of the containers from the rinsing machine according to a procedure similar to the one for entry. During the entry and exit phases, the grip elements effect an angular displacement relative to the rinsing machine in the direction accompanying the containers during the transfer.

This allows to open the pincers to a lesser extent and hence to have a greater grip force on the container.

However, the combination of the steel grip element with the rubber flexible elements has been found not be particularly effective, in that the grip exerted by the steel lamina is still not very powerful and the flexible elements are subject to considerable wear with the potential for cuts and ruptures.

The aim of the present invention is to eliminate the aforesaid drawbacks and to make available enhanced deforming pincers which follow the entry and exit motion of the container in the rinsing machine, is constructively simple and economical and is durable.

Said aims are fully achieved by the pincers of the present invention, which are characterised by the contents of the claims set out below and particularly in that the means associated to the grip element and so shaped as to provide the grip element with freedom of angular motion relative to the rinsing machine whereto it is fastened, comprise a slot obtained in a non-deformable portion of the grip element and housing a gasket made of elastic material in which a fixed pivot is inserted in such a way that said grip element can make small angular displacements relative to the pivot, elastically deforming the gasket.

The slot has preferably oval shape and the pivot, having circular cross section is inserted centrally in the slot.

The elastically deformable semi-cylindrical portion comprises an insert made of a material (e.g. polymer) having preferably greater hardness than the material (e.g. polyurethane) constituting the grip element.

The elastically deformable semi-cylindrical portion comprises two lateral recesses relative to the central insert, with elastic bellows obtained in said recesses.

This and other characteristics shall become more readily apparent from the following description of a preferred embodiment illustrated, purely by way of non limiting example, in the accompanying drawing tables, wherein:

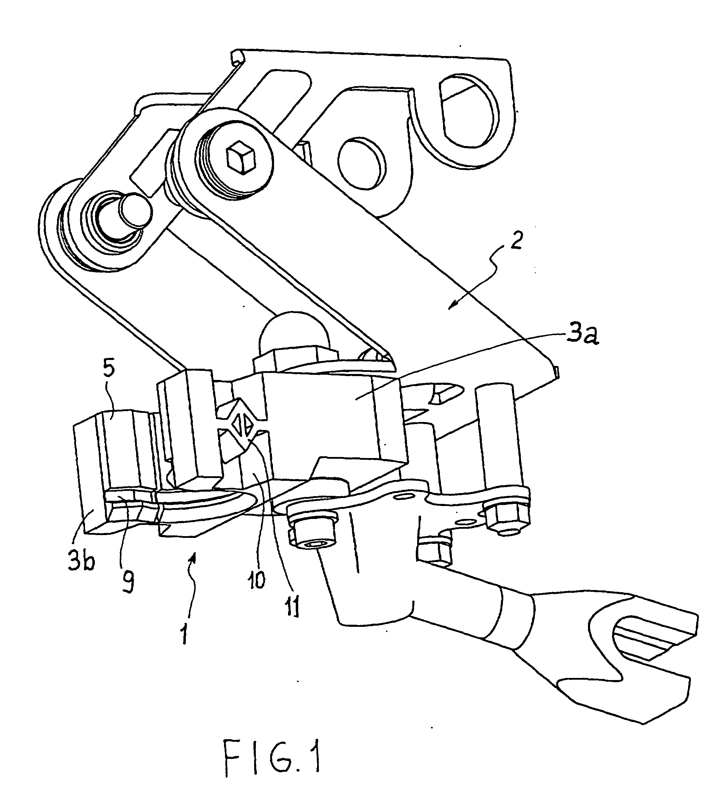

- Figure 1 shows the pincers mounted on a support of the rinsing machine, in a perspective view;

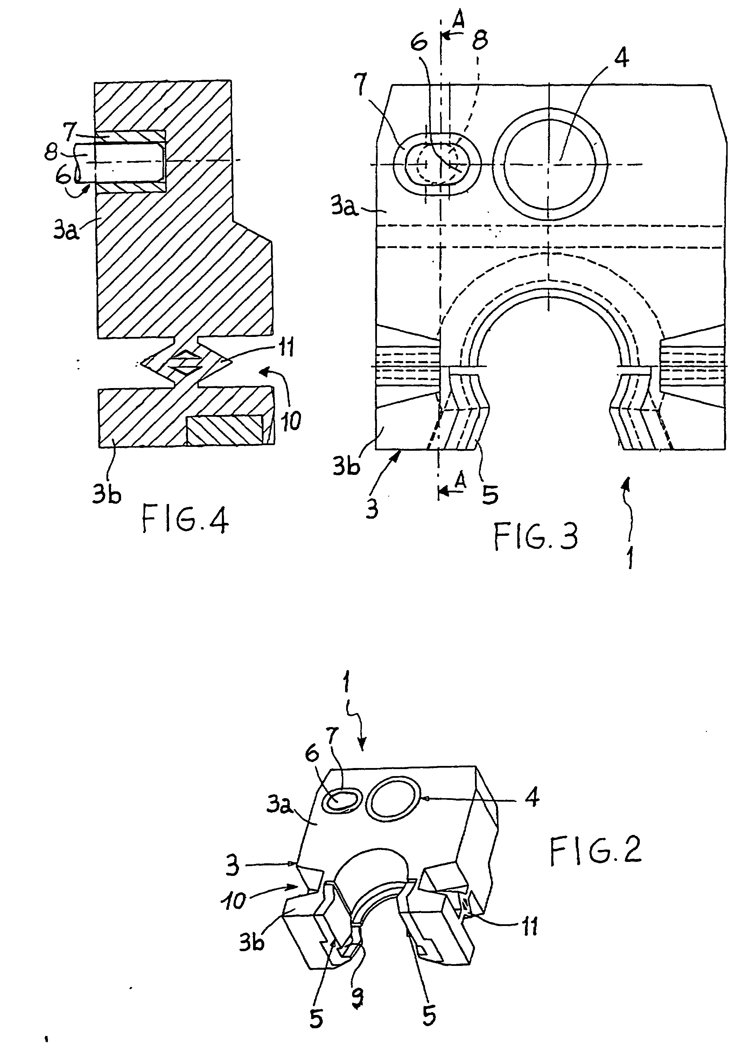

- Figure 2 shows a perspective view of the pincers;
- Figure 3 shows a plan view of the pincers;
- Figure 4 shows the pincers in the section A-A of Figure 3.

With reference to the drawings, the reference number 1 globally indicates deforming pincers mounted on a plurality of known supports 2 comprised in a rotatory machine for rinsing containers.

The pincers comprise a grip element 3 having a non-deformable portion 3a pivotally engaged to the rinsing machine with the possibility of rotating about the central axis of a through hole 4 into which is inserted a bar for connecting the grip element to the support 2.

The grip element also comprises an elastically deformable semi-cylindrical portion 3b so shaped as to grip or respectively release, deforming elastically by simple pressure, a container not shown herein, in the area above the projecting collar, in correspondence with the thread.

The portion 3b originally comprises an insert 5 made with a material having greater hardness than the portion 3a. This allows for a longer duration of the pincers preventing a precocious wear of the grip element.

Preferably, the non-deformable portion 3a is made of polyurethane, whereas the elastically deformable portion 3b is obtained with a polymer.

The non-deformable portion 3a originally defines in its interior a blind slot 6 into which is inserted a gasket 7, preferably made of a micro-cellular elastomer, in which a fixed pivot 8 with circular section acts centrally, which pivot with the gasket and the slot constitutes means associated to the grip element and able to provide it with freedom of angular motion relative to the rinsing machine.

The grip element can effect small elastic oscillations relative to the pivot, elastically deforming the gasket under the pressing action exerted by the containers upon their entry into the pincers or their exit therefrom.

Such oscillations, together with the deformation of the portion 2b, favour both the entry and the exit of the containers.

The insert 5 defines in its own interior a recess 9 which couples with a ring that closes inferiorly the thread of the container and has chamfered edges to favour the entry and exit movements of the container relative to the pincers.

The elastically deformable portion 3b originally comprises two lateral recesses 10 in which are obtained elastic bellows 11 whose vertical section is substantially rhomboid shaped with two triangles inscribed.

The recesses 10 with the bellows 11 favour the elastic deformability of the portion 3b, which would be more rigid if it were solid.

With the present deforming pincers, it is therefore possible to achieve the advantages of the deformability of the grip element, coupled with the advantages of the oscillation of said element to receive or release the containers. All this takes place in an enhanced manner relative to the prior art.

## Claims

1. Pincers (1), in particular for gripping and releasing containers made of plastic materials or PET in a rotatory rinsing machine, comprising:
- a grip element (3) having a non deformable portion (3a) fastened to the rinsing machine and an elastically deformable semi-cylindrical portion (3b) so shaped as to grip or respectively to release, deforming elastically by simple pressure, the area of the container above the collar in correspondence of the thread of the mouth of the container;
- means (6, 7, 8) associated to said element (3) so shaped as to provide the grip element (3) with freedom of angular motion relative to the rinsing machine whereto it is fastened,
**characterised in that** said means comprise a slot (6) obtained in the non deformable portion (3a) and housing a gasket (7) made of elastic material into which is inserted a fixed pivot (8) so that said element (3) can effect small angular displacements relative to the pivot (8), elastically deforming the gasket (7).

2. Pincers as claimed in claim 1, wherein the slot (6) has substantially oval shape and the pivot (8), having circular cross section is inserted centrally in the slot (6).

3. Pincers as claimed in claim 1, wherein the gasket (7) is made of micro-cellular elastomer.

4. Pincers as claimed in claim 1, wherein the elastically deformable semi-cylindrical portion (3b) comprises an insert (5) made of a material whose hardness is greater than that of the material constituting the element (3).

5. Pincers as claimed in claim 4, wherein said material having greater hardness is a polymer.

6. Pincers as claimed in claim 4, wherein the material constituting the element (3) is polyurethane.

7. Pincers as claimed in claim 4, wherein the insert (5) defines in its own interior a recess (9) which is coupled with a ring that inferiorly closes the thread of the container and has chamfered edges to favour the entry of the container into the pincers.

8. Pincers as claimed in claim 1, wherein the elastically deformable semi-cylindrical portion (3b) comprises two lateral recesses (10) relative to the central insert in which elastic bellows (11) are obtained.

9. Pincers as claimed in claim 8, wherein said bellows (11) have their vertical section substantially rhomboid shaped with two triangles inscribed.

10. A rotatory rinsing machine, **characterised in that** it comprises at least a set of pincers (1) as claimed in any of the previous claims.

## Patentansprüche

1. Greifer (1), insbesondere zum Ergreifen und Freigeben von Plastik- oder PET-Behältern in einer drehenden Spülmaschine, umfassend:
- ein Greifelement (3) mit einem nicht verformbaren, an der Spülmaschine befestigten Bereich (3a) und einem elastisch verformbaren halbzylinderförmigen Bereich (3b), der so ausgebildet ist, dass er den Behälterabschnitt oberhalb des Halses in Höhe des Gewindes der Behälteröffnung unter durch einfachen Druck hervorgerufener elastischer Verformung erfasst bzw. freigibt;
- dem genannten Element (3) zugeordnete, derart ausgebildete Mittel (6, 7, 8), dass das Greifelement eine gewisse Winkelbewegungsfreiheit gegenüber der Spülmaschine, an der es befestigt ist, erhält,
**dadurch gekennzeichnet, dass** die genannten Mittel ein in dem nicht verformbaren Bereich (3a) ausgebildetes Langloch (6) umfassen, das eine Dichtung (7) aus einem elastischen Material aufnimmt, in welche ein fester Stift (8) eingebracht ist, so dass das genannte Element (3) kleine Winkelbewegegungen gegenüber dem Stift (8) durchführen kann, wobei sich die Dichtung (7) elastisch verformt.

2. Greifer nach Anspruch 1, bei dem das Langloch (6) eine im wesentlichen ovale Form aufweist und der einen kreisförmigen Querschnitt aufweisende Stift (8) mittig in das Langloch (6) eingebracht ist.

3. Greifer nach Anspruch 1, bei dem die Dichtung (7) aus mikrozellulärem Elastomer besteht.

4. Greifer nach Anspruch 1, bei dem der elastisch verformbare halbzylinderförmige Bereich (3b) einen Einsatz (5) aus einem Material umfasst, dessen Härte über derjenigen des das Element (3) ausbildenden Materials liegt.

5. Greifer nach Anspruch 4, bei dem das genannte eine höhere Härte aufweisende Material ein Polymer ist.

6. Greifer nach Anspruch 4, bei dem das das Element (3) ausbildende Material Polyurethan ist.

7. Greifer nach Anspruch 4, bei dem der Einsatz (5) in seinem Inneren eine Ausnehmung (9) ausbildet, die sich mit einem Ring koppelt, der das Behältergewinde unterseitig verschliesst und abgefaste Kanten aufweist, um das Eintreten des Behälters in die Greifer zu fördern.

8. Greifer nach Anspruch 1, bei dem der elastisch verformbare halbzylinderförmige Bereich (3b) zwei seitlich zu dem mittigen Einsatz angeordnete Ausnehmungen (10) umfasst, in denen elastische Bälge (11) ausgebildet sind.

9. Greifer nach Anspruch 8, bei dem die Bälge (11) im vertikalen Schnitt im wesentlichen eine rhomboidische Form mit zwei eingeschriebenen Dreiecken aufweisen.

10. Drehende Spülmaschine, **dadurch gekennzeichnet, dass** sie mindestens ein Greiferset (1) nach einem der vorhergehenden Ansprüche umfasst.

## Revendications

1. Pinces (1), en particulier pour saisir et relâcher des conteneurs en matière plastique ou PET dans une machine rotative de rinçage, comprenant:
- un élément de prise (3) ayant une portion non déformable (3a) fixée à la machine de rinçage et une portion semi-cylindrique (3b) élastiquement déformable conformée de manière à saisir ou respectivement relâcher, en se déformant élastiquement par simple pression, la zone du conteneur au-dessus du collier en correspondance du filetage du goulot du conteneur;
- des moyens (6, 7, 8) associés audit élément (3) conformé pour donner à l'élément de prise (3) une liberté de mouvement angulaire par rapport à la machine de rinçage sur laquelle il est fixé,
**caractérisées en ce que** lesdits moyens comprennent un orifice (6) obtenu dans la portion non déformable (3a) et logeant un joint (7) réalisé en matériau élastique dans lequel est inséré un pivot fixe (8) de manière à ce que ledit élément (3) puisse effectuer de petits déplacements angulaires par rapport au pivot (8), en déformant élastiquement le joint (7).

2. Pinces selon la revendication 1, dans lesquelles l'orifice (6) présente substantiellement une forme ovale et le pivot (8), ayant une section transversale circulaire, est inséré centralement dans l'orifice (6).

3. Pinces selon la revendication 1, dans laquelle le joint (7) est réalisé en un élastomère micro-cellulaire.

4. Pinces selon la revendication 1, dans laquelle la portion semi-cylindrique déformable (3b) comprend un insert (5) réalisé en un matériau dont la dureté est supérieure à celle du matériau constituant l'élément (3).

5. Pinces selon la revendication 4, dans lesquelles ledit matériau ayant une dureté supérieure est un polymère.

6. Pinces selon la revendication 4, dans lesquelles le matériau constituant l'élément (3) est un polyuréthane.

7. Pinces selon la revendication 4, dans lesquelles l'insert (5) définit en son intérieur une rainure (9) accouplée à un anneau qui ferme inférieurement le filetage du conteneur et présente des bords chanfreinés pour favoriser l'entrée du conteneur dans les pinces.

8. Pinces selon la revendication 1, dans lesquelles la portion semi-cylindrique déformable (3b) comprend deux renfoncements latéraux (10) par rapport à l'insert central dans lesquels sont obtenus des soufflets élastiques (11).

9. Pinces selon la revendication 8, dans lesquelles lesdits soufflets (11) présentent une section verticale substantiellement trapézoïdale avec deux triangles inscrits.

10. Machine rotative de rinçage, **caractérisée en ce qu'**elle comprend au moins un système de pinces (1) selon n'importe laquelle des revendications précédentes.
